# EUROPEAN PATENT APPLICATION

(11) **EP 3 168 964 A1**
(43) Date of publication of application: **17.05.2017**
(21) Application number: 15194498.0
(22) Date of filing: 13.11.2015
(51) Int. Cl.: H02K 5/04

(54) **AN ELECTRICAL MACHINE SERIES WITH A COMMON FLANGE**

(71) Applicant: ABB Schweiz AG, 5400 Baden (CH)
(72) Inventor: BORG, Gustav, 734 40 Hallstahammar (SE); DAVIDOVIC, Ranko, 753 19 Uppsala (SE)
(74) Representative: Savela, Reino Aleksi

(57) **Abstract**

An electrical machine series comprises: a stator housing one (70") with an inner diameter one, the stator housing one (70") being configured to be compatible with a motor flange one (60"), and a stator housing two (170) with an inner diameter two, the inner diameter one being at least 5 % larger than the inner diameter two. The stator housing two (170) is configured to be compatible with the motor flange one (60"). By adapting a stator housing to a large number of existing unique motor flanges instead of adapting the large number of existing unique motor flanges to an existing stator housing a total number of unique articles to be manufactured is reduced.

## Description

### TECHNICAL FIELD

The present invention relates to an electrical machine series comprising a plurality of electrical machines in different sizes.

### BACKGROUND ART

Manufacturers of electrical motors as well as all other industry actors are bound to follow international standards. For example, an IEC 60072-1 standard is about dimensions and output series for rotating electrical machines, and it defines among other things motor sizes by giving shaft heights and corresponding shaft diameters. There are furthermore other regulations, such as a European CENELEC harmonisation document, HD 231, that refer to IEC 60072-1 and specify that a motor of certain size and configuration shall achieve certain rated output. An end user knows thereby an approximate output rate of a motor on the basis of the motor size. Moreover, there are further standards that define e.g. assembly hole diameters and positions in motor flanges by which motors are to be assembled to different applications.

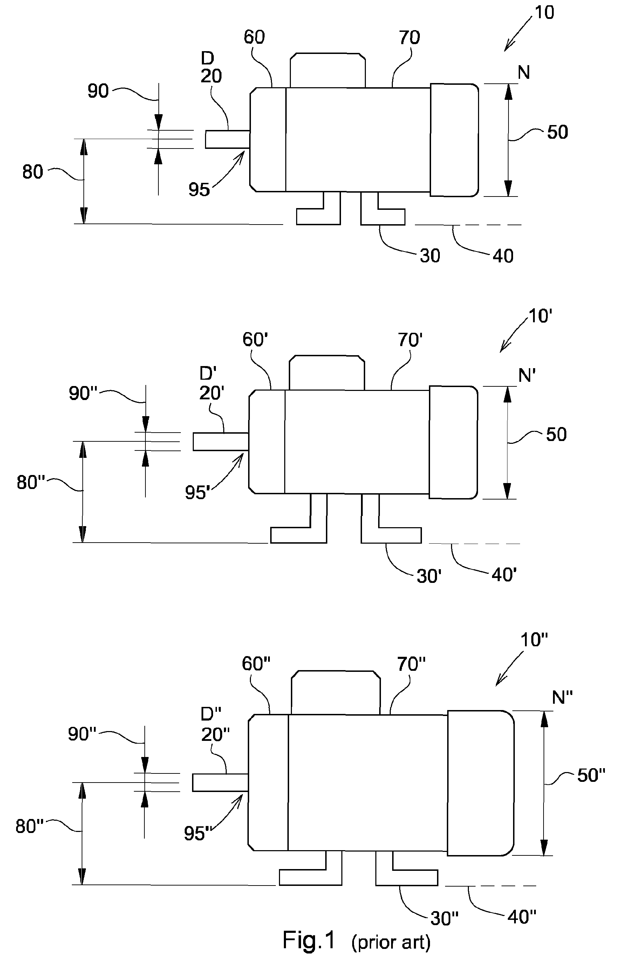

Referring to figure 1, it is conventional that electrical motors 10, 10', 10" comprise a substantially cylindrical form with a relatively constant outer diameter 50, 50" extending between extreme axial ends excluding the shafts 20, 20', 20". Both motor flanges 60, 60', 60" and stator housings 70, 70', 70" in the respective motors 10, 10', 10" contribute to accomplish an overall cylinder envelope. If a motor 10, 10', 10" has feet 30, 30', 30", typically the lowermost part of the cylinder envelope is close to a plane 40, 40', 40" of bottoms of the feet 30, 30', 30". That is, the feet 30, 30', 30" are low and don't increase much the total heights of the motors 10, 10', 10". As a consequence, the outer diameter 50, 50" is in many cases approximately twice the shaft height 80, 80" according to IEC 60072-1. The manufacturers typically have as many discrete stator housing sizes in a motor series as there are motor sizes in IEC 60072-1. The shaft heights 80, 80" between two subsequent motor sizes according to IEC 60072-1 differ in the order of 12 %, and the outer diameters 50, 50" between two subsequent stator housing sizes in a typical motor series differ in the same order, as well as inner diameters of the stator housings 70, 70', 70" do.

However, many motor dimensions are not standardized with big international standards, an inner diameter of a stator housing 70, 70', 70" being one such dimension. This means that a manufacturer is free to choose whatever inner diameter it considers appropriate for a stator housing 70, 70', 70". The stator housing 70, 70', 70" needs to be compatible with a corresponding motor flange 60, 60', 60" that typically is manufactured by the same manufacturer. Consequently, some motor flange dimensions are defined by standards while others are defined by manufacturers. Even if the inner diameters of stator housings 70, 70', 70" are not standardized generally, manufacturers may have internal standards as they may want different types of stators of certain nominal size to be compatible with one and the same stator housing 70, 70', 70".

In many cases it is possible to manage with a stator housing 70, 70', 70" having a smaller outer diameter 50, 50" than that of approximately twice the shaft height 80, 80" to achieve a set rated output. It is considered advantageous for the manufacturer to choose, out of a number of existing discrete stator housing sizes, the smallest possible stator housing 70, 70', 70" within which active parts of the motor 10, 10', 10" can be assembled such that the resulting motor 10, 10', 10" fulfils the set rated output. It is a common practice to adapt the shaft height 80, 80" by adjusting feet height where necessary. Thereby, the second motor 10' of figure 1 has a second shaft height 80" equal with a third shaft height 80" of the third motor 10" even though the second stator housing 70' is identical with a first stator housing 70 of the first motor 10.

However, since IEC 60072-1 defines not only the shaft height 80, 80" but also the shaft diameter 90, 90", the first motor flange 60 at a drive end D adapted to a first motor size and comprising corresponding first shaft opening 95 and first bearing seat (not shown) is not compatible with the second shaft diameter 90" corresponding to a second motor size. Consequently, a second motor flange 60' for the drive end D' needs to be manufactured which is compatible both with a second outer diameter 50 (equal with a first outer diameter 50) and the second shaft diameter 90", i.e. the second motor flange 60' comprises respective second shaft opening 95' and second bearing seat (not shown).

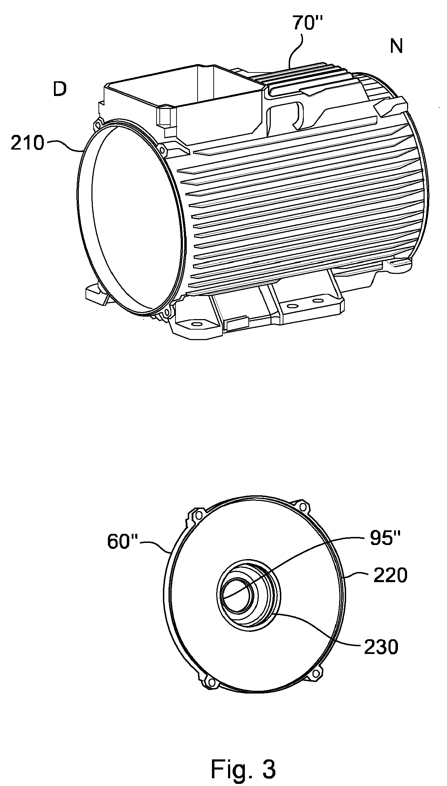

The first, second and third motor flanges 60, 60', 60" at the drive ends D, D', D" thereby become all different. Namely, the first motor flange 60 at the drive end D is adapted to the first outer diameter 50 and a first shaft diameter 90, the second motor flange 60' at the drive end D' is adapted to the second outer diameter 50 and a second shaft diameter 90" (equal with a third shaft diameter 90"), and the third motor flange 60" at the drive end D" is adapted to a third outer diameter 50" and the third shaft diameter 90", i.e. the third motor flange 60" comprises respective third shaft opening 95" and third bearing seat 230 (see figure 3).

There are eventually N-side motor flanges (not shown) at non-drive ends N, N', N" of the motors 10, 10', 10". For the first and second motors 10, 10' any N-side motor flanges may be identical.

Henceforth in this description a term "flange size" will be used to emphasize that the motor flanges 60, 60', 60" are adapted to certain outer diameters 50, 50" and to certain shaft diameters 90, 90". In order for two motor flanges 60, 60', 60" to have different flange sizes at least one of a respective outer diameter 50, 50" and a shaft diameter 90, 90" needs to be different. The first, second and third motor flanges 60, 60', 60" at the drive ends D, D', D" of figure 1 thereby represent three different flange sizes.

Because a motor flange 60, 60', 60" at the drive end D, D', D" of a motor 10, 10', 10" often is customized featuring e.g. different mountings, bearing sizes, materials, re-greasing, vibration monitoring, drain hole positions, etc., at big manufacturers like ABB the number of unique designs for each flange size may be counted in tens or even in hundreds. Each individual flange size may thereby result in tens or hundreds on unique articles to be manufactured.

GB186684A discloses an electrical machine series having a single end shield compatible with two or more magnet yokes of varying sizes. The end shield comprises a spigot machined on both sides in order to adapt it to respective rebated or recessed portions at the ends of the magnet yokes.

### SUMMARY OF THE INVENTION

One object of the invention is to provide an improved electrical motor series with a reduced number of unique articles to be manufactured using simple articles and already existing articles to as great extent as appropriate.

This object is achieved by the device according to appended claim 1 and the method according to appended claim 12.

The invention is based on the realization that by adapting a stator housing to a large number of existing unique motor flanges instead of adapting the large number of existing unique motor flanges to an existing stator housing the total number of unique articles to be manufactured is reduced. Since the existing motor flanges have spigots machined only on one side, and since it is simpler to manufacture a motor flange with a spigot machined only on one side, it is advantageous to adapt stator housings to motor flanges with spigots machined only on one side.

According to a first aspect of the invention, there is provided an electrical machine series comprising a machine one having a stator housing one with an inner diameter one, the stator housing one being configured to be compatible with a motor flange one, and a machine two having a stator housing two with an inner diameter two, the inner diameter one being at least 5 % larger than the inner diameter two, the stator housing two being configured to be compatible with the motor flange one. The motor flange one comprises a spigot with a single surface for defining a radial position of the motor flange one in relation to a respective stator housing.

According to one embodiment of the invention, the single surface is an inner cylinder surface.

According to one embodiment of the invention, the inner diameter one is at least 6 % larger than the inner diameter two, such as at least 8 %, at least 10 % or at least 12 % larger than the inner diameter two.

According to one embodiment of the invention, the motor flange one comprises a shaft opening one compatible with a shaft one.

According to one embodiment of the invention, the electrical machine series further comprises a stator housing three with the inner diameter two, the stator housing three being compatible with a motor flange two of a different flange size than the motor flange one.

According to one embodiment of the invention, the motor flange two comprises a shaft opening two compatible with a shaft two.

According to one embodiment of the invention, the shaft one has a shaft diameter one, and the shaft two has a shaft diameter two, the shaft diameter one being bigger than the shaft diameter two.

According to one embodiment of the invention, the stator housing two is provided with a collar with a large outer dimension in comparison with an outer dimension of the stator housing two.

According to one embodiment of the invention, the machine one and the machine two have identical shaft diameters.

According to one embodiment of the invention, the machine one and the machine two have identical shaft heights. According to one embodiment of the invention, the machine one and the machine two have the same size according to IEC 60072-1 standard.

According to a second aspect of the invention, there is provided a method for reducing the total number of unique articles in an electrical machine series. The method comprises the steps of: providing a machine one having a stator housing one with an inner diameter one, the stator housing one being configured to be compatible with a motor flange one; providing a machine two having a stator housing two with an inner diameter two, the inner diameter one being at least 5 % larger than the inner diameter two; and adapting the stator housing two to be compatible with the motor flange one.

### BRIEF DESCRIPTION OF THE DRAWINGS

The invention will be explained in greater detail with reference to the accompanying drawings, wherein
- figure 1: shows a conventional electrical motor series,
- figure 2: shows an electrical motor series according to one embodiment of the invention, and
- figure 3: shows a stator housing and a corresponding motor flange of an electrical motor.

### DESCRIPTION OF PREFERRED EMBODIMENTS

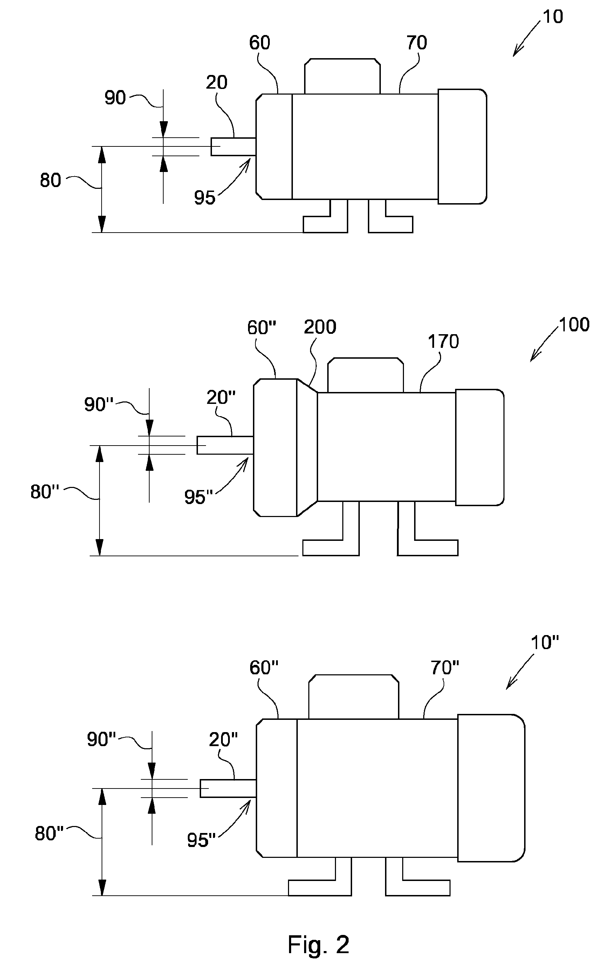

Referring to figure 2, an electrical motor series according to one embodiment of the invention comprises first and third motors 10, 10" identical with the first and third motors 10, 10" of figure 1, respectively. The motor series furthermore comprises a fourth motor 100 which is different from all of the motors 10, 10', 10" present in figure 1. However, the motor size (according to an IEC 60072-1 standard) of the fourth motor 100 is identical with those of the second and third motors 10', 10", and a fourth motor flange 60" which is part of the fourth motor 100 is identical with the third motor flange 60" which is part of the third motor 10".

The fourth motor 100 comprises a fourth stator housing 170 that is configured to be compatible with the fourth motor flange 60" by providing it with a frustum-shaped collar 200 having an increasing diameter. The fourth stator housing 170 has a fourth inner diameter that is identical with a first inner diameter of the first stator housing 70. An inner diameter of a stator housing 70, 70', 70", 170 is an important dimension as it defines the size of the stator that is compatible with the respective stator housing 70, 70', 70", 170. It is therefore appropriate to use inner diameters of stator housings 70, 70', 70", 170 as reference dimensions for the purpose of defining a scope of protection of the appended patent claims. In the context of the present disclosure an inner diameter of a stator housing 70, 70', 70", 170 should be considered to be a diameter of a cylinder corresponding to an overall shape of an interior of the stator housing 70, 70', 70", 170, the "overall shape" referring to a shape where minor details are disregarded.

For example, in the case of the fourth stator housing 170, we can assume that an interior of the same at the cylindrical envelope has a shape of a perfect cylinder excluding four protrusions that extend in radial direction towards a central axis of the cylinder and the function of which is to prevent a relative rotational movement between the fourth stator housing 170 and a respective stator, and that a collar inner diameter of the frustum-shaped collar 200 increases together with a collar outer diameter of the same. For the purpose of defining an inner diameter of the fourth stator housing 170 the protrusions and the frustum-shaped collar 200 are disregarded as they represent minor details in relation to the overall cylindrical interior of the fourth stator housing 170. Typically it is not difficult to define inner diameters of stator housings 70, 70', 70", 170, as most of them are cylindrical, but should an interior of a stator housing 70, 70', 70", 170 have a shape of e.g. a square cuboid, the inner diameter of the same should be considered to be equal with the sides of the square.

The frustum-shaped collar 200 may either be an integral (cast) part of the fourth stator housing 170, or it can be a non-integral part attached to the fourth stator housing 170 by means of welding or by means of fixing elements such as bolts. In the latter case the frustum-shaped collar 200 (having an increasing diameter) can be considered to represent an option whereby the fourth motor 100 is achieved, whereas another option is represented by a cylinder-shaped collar (having a constant diameter, not shown) whereby the first motor 10 is achieved. Such arrangement would allow the fourth stator housing 170 to be used in motors of the first shaft height 80 as well as in motors of the second shaft height 80".

An alternative way to reduce the number of existing unique motor flanges 60, 60', 60" is explained with reference to figure 1 although figure 1 does not disclose a corresponding embodiment. The first motor flange 60 at a drive end D may be identical with the second motor flange 60' at the drive end D' excluding the respective first and second shaft openings 95, 95' and corresponding bearing seats. However, since the second shaft opening 95' is larger than the first shaft opening 95, with a relatively simple adapter comprising an adapted shaft opening (corresponding to the first shaft opening 95 compatible with the first shaft diameter 90) and a corresponding bearing seat the second motor flange 60' can be rendered compatible with the first shaft 20. The first motor flange 60 can thereby be replaced by the second motor flange 60' provided with the adapter, and the total number of unique articles to be manufactured is again reduced.

Figure 3 can be considered to show a third stator housing 70" and the corresponding third motor flange 60". The third stator housing 70" comprises a rebate 210 with a cylindrical machined outer surface (the surface faces off the cylinder axis of the same), and the third motor flange 60" comprises a corresponding spigot 220 with a cylindrical machined inner surface (the surface faces the cylinder axis of the same). The machined inner surface of the spigot 220 defines a radial position of the third motor flange 60" in relation to the third stator housing 70" by snugly fitting around the machined outer surface of the rebate 210.

The invention is not limited to the embodiments shown above, but the person skilled in the art may modify them in a plurality of ways within the scope of the invention as defined by the claims. Thus, the invention is not limited to electrical motors 10, 10', 10", but may also be applied to other electrical machines such as generators.

## Claims

1. An electrical machine series comprising:
a machine one (10'') having a stator housing one (70'') with an inner diameter one, the stator housing one (70'') being configured to be compatible with a motor flange one (60"), and
a machine two (100) having a stator housing two (170) with an inner diameter two, the inner diameter one being at least 5 % larger than the inner diameter two, the stator housing two (170) being configured to be compatible with the motor flange one (60"),
**characterized in that** the motor flange one (60") comprises a spigot with a single surface for defining a radial position of the motor flange one (60") in relation to a respective stator housing (70", 170).

2. An electrical machine series according to claim 1, wherein the single surface is an inner cylinder surface.

3. An electrical machine series according to any of the preceding claims, wherein the inner diameter one is at least 6 % larger than the inner diameter two, such as at least 8 %, at least 10 % or at least 12 % larger than the inner diameter two.

4. An electrical machine series according to any of the preceding claims, wherein the motor flange one (60") comprises a shaft opening one (95") compatible with a shaft one (20").

5. An electrical machine series according to any of the preceding claims, further comprising a stator housing three (70) with the inner diameter two, the stator housing three (70) being compatible with a motor flange two (60) of a different flange size than the motor flange one (60").

6. An electrical machine series according to claim 5,
wherein the motor flange two (60) comprises a shaft opening two (95) compatible with a shaft two (20).

7. An electrical machine series according to claim 5,
wherein the motor flange one (60") comprises a shaft opening one (95") compatible with a shaft one (20") having a shaft diameter one (90"), and the motor flange two (60) comprises a shaft opening two (95) compatible with a shaft two (20) having a shaft diameter two (90), the shaft diameter one (90") being bigger than the shaft diameter two (90).

8. An electrical machine series according to any of the preceding claims, wherein the stator housing two (170) is provided with a collar (200) with a large outer dimension in comparison with an outer dimension of the stator housing two (170).

9. An electrical machine series according to any of the preceding claims, wherein the machine one (10'') and the machine two (100) have identical shaft diameters (90").

10. An electrical machine series according to any of the preceding claims, wherein the machine one (10'') and the machine two (100) have identical shaft heights (80").

11. An electrical machine series according to any of the preceding claims, wherein the machine one (10'') and the machine two (100) have the same size according to IEC 60072-1 standard.

12. A method for reducing the total number of unique articles in an electrical machine series, the method comprising the steps of:
- providing a machine one (10'') having a stator housing one (70'') with an inner diameter one, the stator housing one (70'') being configured to be compatible with a motor flange one (60"); and
- providing a machine two (100) having a stator housing two (170) with an inner diameter two, the inner diameter one being at least 5 % larger than the inner diameter two;
**characterized by** adapting the stator housing two (170) to be compatible with the motor flange one (60").
